# EUROPEAN PATENT APPLICATION

(11) **EP 4 535 756 A2**
(43) Date of publication of application: **09.04.2025**
(21) Application number: 24183525.5
(22) Date of filing: 20.06.2024
(51) Int. Cl.: H04L 65/102, H04L 65/1045, H04L 65/1069, H04L 65/1104, H04L 67/04, H04L 67/12, H04M 11/02, H04L 12/46, H04L 61/10, H04L 61/4535, H04L 61/4557, H04L 61/59

(54) **IMPROVED COMMUNICATION SYSTEM SUITABLE FOR HEALTHCARE APPLICATIONS**

(30) Priority: 23.06.2023 EP 23181191
(71) Applicant: Televic NV., 8870 Izegem (BE)
(72) Inventor: Paixao, Julien, 59200 Tourcoing (FR); Verhaeghe, Geert, 8680 Koekelare (BE); Verheye, Marino André, 8760 Meulebeke (BE); Crombez, Pieter, 8820 Torhout (BE)
(74) Representative: Patentales BV

(57) **Abstract**

The invention provides, amongst other aspects, a device comprising: a gateway interface (1b) comprises signaling wiring (4) and media session wiring (3) for connecting with a plurality of stations (200, 200') belonging to a gateway domain (20); wherein the device is configured for: detecting, via the signaling wiring (4), a call initiation request from one of the stations (200) with respect to another station (200') belonging to said plurality of stations; upon detecting said call initiation request, transmitting, via the signaling wiring (4), said call initiation request to the other station (200'); upon call initiation, carrying a media session between the station (200) and the other station (200').

## Description

### Field of the invention

The present invention relates to improved communication devices, systems, and methods. Particularly, the invention relates to intercom-based communication suitable for healthcare applications.

### Background art

State of the art real-time communication systems, such as intercom systems, commonly involve IP-based communication, such as VoIP. Typically, the protocol stack thereby involves a protocol running over IP to set up, maintain, modify and terminate real-time communication sessions. A popular protocol to this end is SIP. However, implementing a full SIP protocol stack sets may be expensive in terms of hardware requirements, and moreover may lack scalability and/or lack robustness.

CN104702602A, US20190166256A1, and EP3322257B1 disclose related methods and devices but lack robustness and/or still require full implementation of the SIP protocol stack.

The present invention aims at addressing issues, such as the issues mentioned above.

### Summary of the invention

According to a first aspect, the present invention provides a device comprising:
a gateway interface comprising signaling wiring and media session wiring for connecting with a plurality of stations, preferably at least three stations, belonging to a gateway domain;
wherein the device is configured for:
   detecting, via the signaling wiring, a call initiation request from one of the stations with respect to another station belonging to said plurality of stations;
   upon detecting said call initiation request, transmitting, via the signaling wiring, said call initiation request to the other station;
   upon call initiation, carrying a media session between the station and the other station; whereby **preferably** the media session is carried between the device and the station and between the device and the other station over dedicated channels on said media session wiring, and whereby **preferably,** for at least one station, said connecting to the station via said respective signaling wiring and media session wiring of the gateway interface relates to connecting to a respective signaling device associated with a signaling device ID and a media session device associated with a media session device ID;
   wherein the device comprises memory comprising commissioning information for linking each signaling device ID to each media session device ID for assigning the signaling device and the media session device to the same station.

Thereby, the gateway domain is generically indicated with "second domain" throughout this document, the terms being interchangeable. Likewise, the IP domain is generically indicated with "first domain" throughout this document, the terms being interchangeable. The distinction between first domain and second domain merely relates to a logical separation and cannot be construed as limiting the domains to certain locations. Particularly, both stations belonging to the second domain and IP stations belonging to the first domain may physically be co-located. The logical separation between the first domain and second domain merely relates to the first domain devices being connected to the device via the IP interface, whereas the second domain devices connect to the device via the gateway interface.

The term "IP" refers to internet protocol, whereas "SIP" refers to session initiation protocol.

In preferred embodiments, the media session is carried between the device and the station over a dedicated channel on said media session wiring. Related, in preferred embodiments, the media session is carried between the device and the other station over another dedicated channel on said media session wiring. Related, in more preferred embodiments the media session is carried between the device and the station over a dedicated channel provided on the media session wiring extending between the device and the station, on the one hand, and between the device and the other station over another dedicated channel provided on the media session wiring extending between the device and the other station. In alternative embodiments, no dedicated channel is provided.

In preferred embodiments, the media session wiring connecting the device with the station and the media session wiring connecting the device with the other station is partially overlapping, as is the case in, e.g., a daisy chain topology. In alternative embodiments, the media session wiring connecting the device with the station and the media session wiring connecting the device with the other station is non-overlapping, as is the case in, e.g., a star topology.

In preferred embodiments, said media session being carried between the device and the station and between the device and the other station over the dedicated channels relates to a duplex media session. The duplex media session comprises two corresponding media streams being carried over respective dedicated channels on said media session wiring. This corresponds to a media stream running from the station to the other station, and another media stream running from the other station to the station, i.e. two media streams.

In embodiments, the number of stations is at least three. In example embodiments, the number of stations is three or four or more than four or five or more than five.

Such a device may be advantageous in that the gateway interface comprises both signaling wiring and media session wiring separately. This may allow to reduce the device complexity of devices within the second domain, and/or enhancing flexibility, e.g., by handling the definition of virtual agents at the level of the device. This may allow to alleviate the hardware and/or software requirements of devices and wiring belonging to the second domain, and furthermore allows to use these devices in a modular fashion. Particularly, rather than having hardwired or similar stringent links between signaling and media session wiring for defining a party, as is the case for a (traditional) SIP-over-IP agent, the provision of separate wiring allows virtual agents to be defined. In embodiments, this relates to defining virtual agents. In embodiments, this relates to defining virtual agents that do not relate to SIP. In example embodiments, this relates to defining virtual agents that adhere to a proprietary communication protocol. In example embodiments, this relates to defining virtual agents that adhere to a communication protocol and/or communication technology relating to VoIP, such as Microsoft Teams, Skype, Apple FaceTime, Jitsi, etc. Thereby, second domain devices relating to signaling may be other devices than those relating to the media session, with preferably also completely separate second domain wiring leading toward the device. The functionality implemented in each device may be simplified, as none of the devices is required to implement all the functionalities of an actual agent. In embodiments, the implementation of an actual SIP agent may altogether be avoided. In other embodiments, the functionality implemented in each device may be such that a virtual agent or even an actual SIP agent is implemented. Regardless, having separate wiring for signaling and for media sessions implies that less and/or more predictable traffic is running over the wiring of the second domain. In its turn, particularly in embodiments where the traffic in the second domain does not run over IP, this may allow to use legacy cabling (with, e.g., smaller bandwidth), rather than requiring new cabling (with, e.g., larger bandwidth). By enabling defining virtual agents, such as virtual agents, enhanced flexibility may be provided, as some second domain devices may be replaced without the other devices belonging to the same virtual agent needing replacement. Thereby, preferably, media session wiring in the second domain provides separate dedicated channels in each direction for carrying the media session, as this provides for enhanced robustness, with more predictable system behavior, which may lead to less stringent implementation requirements and, related, reduced associated cost.

Particularly, in embodiments of the invention, the cost associated may be reduced by avoiding, for at least one second domain device and/or for the gateway interface comprised in the device, the use of the IP protocol altogether. The IP protocol, and related IP-protocol-based protocol stacks, generally require a full operating system (with associated memory and processing power requirements, for example a 32-bit microprocessor). In contrast, many protocols suitable for setting up said dedicated channel via the media session wiring, such as LVDS, merely require some state machine hardware. Likewise, many protocols suitable for signaling (e.g., for sending said call initiation request over said signaling wiring), such as CAN or RS485, also do not require a full-fledged OS. In example embodiments, signaling in the second domain may relate to interrupt driven handling. In embodiments, the signaling in the second domain consists of interrupt driven handling. Interrupt driven handling may be thereby advantageously relax hardware requirements, enabling reduced requirements on memory and processing power of the signaling interface comprised in second domain devices and/or the device, for example a 16-bit microcontroller.

According to a second aspect, the invention provides a system comprising:
a plurality of stations, preferably at least three stations, belonging to a gateway domain;
**preferably,** a plurality of IP stations belonging to an IP domain;
a device, preferably the device according to the invention, comprising:
   a gateway interface comprising signaling wiring and media session wiring for connecting with the plurality of stations;
   **preferably,** an IP interface for connecting with the plurality of IP stations;
wherein the device is configured for:
   detecting, via the signaling wiring, a call initiation request from one of the stations with respect to another station belonging to said plurality of stations;
   upon detecting said call initiation request, transmitting, via the signaling wiring, said call initiation request to the other station;
   upon call initiation, carrying a media session between the station and the other station, whereby the media session is preferably carried between the device and the station and between the device and the other station over dedicated channels on said media session wiring;
   wherein said plurality of the stations is configured for:
      transmitting, based on any user-related trigger, any call initiation request to the device;
      detecting, from the device, any call initiation request;
      upon call initiation, carrying the media session to and from the device;
      wherein **preferably,** for at least one station, said connecting to the station via said respective signaling wiring and media session wiring of the gateway interface relates to connecting to a respective signaling device associated with a signaling device ID and a media session device associated with a media session device ID;
      wherein **preferably** the device comprises memory comprising commissioning information for linking each signaling device ID to each media session device ID for assigning the signaling device and the media session device to the same station (200; 200').

In embodiments, the number of devices comprised in the system is more than one, e.g., two or more than two or three or more than three, with a respective gateway sub-domains per respective device. Thereby, in example embodiments, the number of stations is at least three in each sub-domain.

According to a further aspect, the invention provides a method for commissioning an intercom system, the intercom system comprising:
a plurality of signaling devices and media session devices belonging to a gateway domain, one of the signaling device and media session devices being the first devices and the other being the second devices according to a predetermined commissioning order;
preferably, a plurality of IP stations belonging to an IP domain;
a device, preferably the device according to the invention, comprising
   a gateway interface comprising signaling wiring connected to the signaling devices and media session wiring connected to the media session devices;
   preferably, an IP interface connected with the plurality of IP stations;
the method comprising the steps of:
   entering commissioning mode, causing indicators belonging to at least the first devices or the second devices to generate a visual or auditory indicator;
   manually selecting a first device for commissioning, via a user input means on said first device, thereby causing a first commissioning ID to be transmitted to the device;
   manually selecting a second device to be associated to the first device within a common station, via a user input means on said second device, thereby causing a second commissioning ID to be transmitted to the device;
   having the device store said first and second commissioning ID, for linking the first and second commissioning ID being the signaling device ID and the media session device ID as belonging to the same station;
   repeating said manual selecting of other respective first and second devices, for linking each as belonging to the same respective stations.

Such a method and system may have advantages similar to the device according to the invention.

According to a further aspect, the invention provides a use of a Hall switch for commissioning an intercom system. , Preferably, the use relates to an intercom system comprising a first device associated with a first commissioning ID and a second device associated with a second commissioning ID, wherein the commissioning comprises linking the first and second device as belonging to the same station based on a first signal comprising the first commissioning ID and a second signal comprising the second commissioning ID, and wherein the Hall switch is used as user input means for generating at least one of said first and second signal. In embodiments, this relates to the first and second device being a signaling device and a media session device, or vice versa. This may advantageously provide an intercom device without any further button being visible or present on the front or any external surface of the device. By not having such a button, the overall hygiene of the device may be improved, as there is no need for touching the device or cleaning the button. Also user interaction may be simplified, because buttons that are needed only for commissioning mode may needlessly confuse users during regular operation. Thereby, the Hall switch may be switched by the operator during commissioning, by means of a simple magnet or similar device, which may conveniently be needed only during commissioning, and not during regular operation.

Preferred embodiments and their advantages are provided in the description and the dependent claims.

### Brief description of the drawings

The present invention will be discussed in more detail below, with reference to the attached drawings.
**Figure 1** shows a first example system overview according to the invention.
**Figure 2** shows a second example system overview according to the invention.

### Description of embodiments

The following descriptions depict only example embodiments and are not considered limiting in scope. Any reference herein to the disclosure is not intended to restrict or limit the disclosure to exact features of any one or more of the exemplary embodiments disclosed in the present specification.

Furthermore, the terms first, second, third and the like in the description and in the claims are used for distinguishing between similar elements and not necessarily for describing a sequential or chronological order. The terms are interchangeable under appropriate circumstances and the embodiments of the invention can operate in other sequences than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B, rather with respect to the present invention, the only enumerated components of the device are A and B, and further the claim should be interpreted as including equivalents of those components.

In embodiments the invention relates to an improved intercom system. In embodiments, it relates to an improved commissioning method for setting up the system. In embodiments, it relates to improved echo cancellation.

In this document, the term "call initiation request" may refer to any (digital or analog) signal for requesting a media session to be set up. In embodiments, in the gateway domain and/or the IP domain, this may relate to a signal carried over an anolog or digital line according to a proprietary protocol. In example embodiments, in the gateway domain, this may relate to a mere voltage difference on the signaling wiring, e.g., a transition (either momentary or for a longer period) from a first voltage level to a second voltage level, which may indicate a call initiation request. In other example embodiments, in the gateway domain and/or the IP domain, this may relate to the transmission of a digital message on a CAN bus provided on the signaling wiring. In embodiments, in the gateway domain and/or the IP domain, preferably at least in the IP domain, this may relate to the transmission of an IP packet. In embodiments, in the gateway domain and/or the IP domain, this may relate to a call initiation request inviting the other party to initiate an IP session, rather than being a protocol-specific request, such as a "SIP call initiation request" (i.e., a call initiation request formatted in accordance with the specifications of the SIP standard). In other embodiments, the call initiation request relates to, preferably comprises, an IP call initiation request, i.e., a call initiation request formatted in accordance with the specifications of the IP standard.

In this document, the term "IP interface" refers to any data interface that is capable to send and/or receive data packets formatted in accordance with the internet protocol (IP). This said, the term "IP interface'" is not to be construed as limiting the interface to IP only, as it may additionally support other digital and/or analog interfaces. In preferred embodiments, the IP interface carries traffic relating to a SIP session, whereby interaction is governed according to a SIP/IP protocol stack. Related, in this document, the term "IP domain" refers to a data domain wherein data packets are sent and/or received in accordance with the internet protocol. In embodiments where communication runs partially or entirely over a SIP/IP protocol stack, the IP domain may be referred to as SIP domain. Related, in this document, the term "IP station" refers to a station sending and/or transmitting data packets in accordance with the internet protocol. In embodiments where this is done partially or entirely over a SIP/IP protocol stack, the IP station may be referred to as SIP station.

In this document, the term "virtual agent" may refer to any functional unit suitable for being a party in a media session between parties, e.g., a station or an IP station. Thereby, a station may act as virtual agent in any media session, regardless of the nature of the other party/parties. In cases where one of the parties is an IP station, in embodiments, the virtual agent may be perceived by the IP station as being another IP station or, in particular embodiments, another SIP station, despite the virtual agent not implementing all IP or SIP functionality, respectively. In such cases, the virtual agent may be referred to as a virtual IP agent or virtual SIP agent, respectively.

In embodiments, the invention may allow avoiding the implementation of full SIP clients for each device of the intercom system. This way, the heavy requirements that go along with SIP may be mitigated. This may relate to avoiding implementing the IP protocol stack (e.g., set-up with the Session Description Protocol (SDP); encapsulation of IP messages in transport layer protocol messages such as UDP, TCP, SCTP, TLS, RTP, etc, which commonly use/require the IP protocol as lower layer). This may also relate to relaxing the requirements for the wiring needed to run SIP, with stringent requirements for, e.g., UTP cabling (Cat. 6), which is often not available in many existing buildings.

In embodiments, the concept aims to provide easier commissioning of the intercom system. Setting up a standard SIP system involves at least some technical burden for configuring a SIP server and the multiple SIP clients and may be challenging for users. There is a need for automation of the commissioning.

In embodiments, the invention provides an alternative to a system entirely based on SIP server and SIP clients, by distinguishing an IP domain and a second domain, mediated by a device which may act, e.g., as SIP server. The IP domain may have regular SIP clients that may be prior art devices, whereas the second domain may have second domain devices that are connected to the device via protocols different from SIP. Thereby, the media session data may be exchanged between the device and the devices of the second domain over separate wiring allowing a dedicated channel (such as an LVDS channel). The use of a dedicated channel may be advantageous as it improves reliability, being more suitable for real-time streaming, as opposed to packet-based switching such as IP switching, where the possibility of packet collision entails buffering lag and/or jitter and/or packet loss. The signalling may be performed between the device and the devices of the second domain via different wiring, and other associated protocols (such as a CAN bus). This may have the advantage of not interfering with the media session data.

In embodiments, in the mediation between the IP domain and the second domain, the device may emulate IP-based interaction, e.g., SIP interaction, between the IP stations of the first domain and the virtual agents of the second domain, so that IP stations of the IP domain, e.g., SIP stations, perceive the second domain devices as if they concern IP agents, i.e., as virtual IP agents, or, in particular embodiments, as virtual SIP agents.

In embodiments, the device emulates SIP interaction for the devices of the second domain, and the SIP client functionality need not be implemented in each of the second domain devices and may instead reside mainly or solely in the device, which may implement the SIP server functionality as well as the functionality required to provide said emulation.

Such an approach may relax requirements on the second domain devices and may lead to reduced cost and improved robustness. Moreover, the emulated SIP interaction may relax the requirements on the wiring connecting the device with the second domain devices, since hardware-oriented protocols such as LVDS and CAN bus (or, e.g., RS485) may be employed in the second domain instead of the more complex SIP-related protocols, without compromising on the IP call quality or overall intercom reliability. Moreover, such hardware-oriented protocols afford carrying the audio data over reliable dedicated channels, rather than subjecting it to packet-based switching such as IP switching, which entails the risk of media signal degradation.

In embodiments, different second domain devices are attributed (grouped) according to different virtual agents. For second domain devices that are colocated, e.g., located in the same room, the device may group the second domain devices to be perceived, from the viewpoint of IP stations in the IP domain, as single virtual agent.

In embodiments, a second domain device may comprise more than one SIP-related functionality, e.g., a speaker and a microphone, or a speaker + screen + microphone, which may be grouped by the device under the same virtual agent, preferably together with a user signaling device.

In embodiments, a colocated speaker (SPRK) and microphone (MIC) comprised in the same media session device are associated to different media streams, carried by the device according to different (software) threads independently, i.e., without the time shift between the two streams known beforehand. In such a case, the speaker stream and microphone stream cannot be processed according to traditional echo cancellation methods, which rely on a known time shift. In embodiments, a solution to this problem may be to 'reuse' the availability of dedicated media streams in the second domain, by having the media session device send the received stream, or at least portions of that stream, back to the device "in sync" with the transmitted microphone device, over different dedicated channels. That way, the device may directly determine the time shift between audio streams and, based thereupon, apply echo cancellation.

In embodiments, the IP stations are provided with an app, e.g., an Android app, for facilitating configuration in correspondence with the configuration of the device.

In embodiments, commissioning of the system is performed based on a trigger of the device (e.g., a button pressed on the device), causing one or more second domain devices, or all the second domain devices, to enter commissioning mode. The subsequent clustering of colocated second domain devices may be enabled by manual acknowledgment on each of the colocated devices. For instance, subsequent manual acknowledgment on several colocated devices in a brief period of time may cause the considered second domain devices to be considered as colocated (e.g., in the same room) by the device. Thereby, in preferred embodiments, the means for performing manual acknowledgment do not only comprise buttons but also "invisible buttons" such as a Hall-effect switch, as this leads to less buttons ("cleaner" in use and design).

CN104702602A discloses a system relating to the invention yet is merely directed at capacity expansion by means of SIP-based communication.

US20190166256A1 discloses a device comprising a Hall-effect-based function. However, in US20190166256A1 the Hall-effect-based function appears to relate to a Hall sensor, and not to any switching functionality.

EP3322257B1 discloses a gateway device for connecting a first network and a second network each having an address space at least partially overlapped with each other. However, EP3322257B1 appears to assume an IP-based protocol stack for both the first and second network.

In embodiments, said media session being carried between the device and the station over the dedicated channel relates to a duplex media session comprising two corresponding media streams being carried over respective dedicated channels on said media session wiring.

In embodiments, at least one station comprises a signaling device and a media session device; said signaling device being associated with a signaling device ID for connection with the signaling wiring of the device; said media session device being associated with a media session device ID for connection with the media session wiring of the device; wherein the device comprises memory comprising commissioning information for linking each signaling device ID to each media session device ID for assigning the signaling device and the media session device to the same station acting as single virtual agent.

In embodiments, more than one media session device and/or more than one media session device are assigned to the same station acting as single virtual agent. This may relate to a "many to one relationship" between second domain devices, with more than one signaling device coupled to a single media session device, or vice versa.

In embodiments, at least one station comprises a first signaling device, a second signaling device, and a media session device. Thereby, the first and second signaling device may be associated with a first and second signaling device ID for respective connections with the signaling wiring of the device. The media session device, on the other hand, may be associated with a media session device ID for connection with the media session wiring of the device. The device may comprise memory comprising commissioning information for linking the first and second signaling device ID to the media session device ID for assigning the first and second signaling device and the media session device to the same station acting as single virtual agent. This may relate to embodiments wherein more than one signaling device and a single media session device are assigned to the same station acting as single virtual agent. In examples in the healthcare domain, this may relate to a room that is provided with a first user signaling device being a pull chord in the shower and a second user signaling device being a button near the toilet, both associated with the same media session device comprising a microphone and a loudspeaker.

In embodiments, the signaling device and the media session device are comprised in separate housings.

In embodiments, all interaction between the signaling device and the media session device comprised in the same station is mediated via the device.

In embodiments, for said at least one station the media session device comprises a first and second media session device each associated with a respective media session device ID; wherein for said at least one station the signaling device comprises a first signaling device and a first and second user signaling device each connected to the first signaling device, the first and second user signaling device each associated with a respective user signaling device ID; wherein said commissioning information includes information for linking the first user signaling device ID to the first media session device ID and the second user signal device ID to the second media session device ID for assignment to the same station acting as a first and second virtual agent, e.g., as a first and second virtual agent.

In embodiments, the first and second user signaling device are comprised in separate housings and each comprise a button for generating said call initiation request.

In embodiments, the device is further configured for:
entering a commissioning mode;
detecting, via one of the signaling wiring and the media session wiring, a first commissioning ID originating from one of the signaling device and the media session device comprised in said at least one station;
detecting, via the other one of the signaling wiring and the media session wiring, a second commissioning ID originating from the other one of the signaling device and the media session device;
storing said first and second commissioning ID in said commissioning information, for linking the first and second commissioning ID being the signaling device ID and the media session device ID as belonging to said at least one station.

In embodiments, the first and second commissioning ID are detected according to a predetermined sequence for commissioning the signaling device before the media session device, or vice versa.

In embodiments, said entering of said commissioning mode by the device comprises transmitting a trigger for a visual or auditory indication on an indicator belonging to at least one of the signaling device and the media session device, said visual or auditory indicator terminating **either** after said detecting of the concerned one of the first or second commissioning ID or after said storing of said first and second commissioning ID in said commissioning information.

In embodiments, the device is further configured for:
detecting, via the media session wiring, at least a media sample originating from the media session device over a further dedicated channel different from the dedicated channels of the media streams of the duplex media session, said media sample representing a digital echo of the media stream carried to the media session device;
calculating, based on the media stream of the duplex media session carried to the media session device and the detected media sample originating from the media session device, a time shift;
performing echo cancellation on the media stream of the duplex media session carried from the media session device based on the calculated time shift. Such embodiments may advantageously provide echo cancellation. Thereby, echo cancellation may be provided at a station involved in a media session regardless of the nature of the other party involved in the media session. Particularly, as the echo cancellation with respect to a given station is handled at the level of the device, it may be provided regardless of whether the other party is also a station in the gateway domain, or an IP station in the IP domain. Moreover, this may have the advantage that echo cancelling is done centrally, reducing hardware requirements on the second domain devices, by providing the required functionality only at the level of the device. In embodiments, the echo cancellation relies at least on the subtraction of two signals. In embodiments, the echo cancellation relies on a combination of subtraction and/or filtering and/or adaptive filtering. For example, the filtering or adaptive filtering may relate to accounting for reverberation on walls and/or acoustic parameters of loudspeaker and/or microphone.

In embodiments, at least one station comprises a signaling device and a media session device; said signaling device being associated with a signaling device ID for connection with the signaling wiring of the device; said media session device being associated with a media session device ID for connection with the media session wiring of the device; wherein the device is further configured for:
entering a commissioning mode;
detecting, via one of the signaling wiring and the media session wiring, a first commissioning ID originating from one of the signaling device and the media session device comprised in said at least one station;
detecting, via the other one of the signaling wiring and the media session wiring, a second commissioning ID originating from the other one of the signaling device and the media session device;
storing said first and second commissioning ID, for linking the first and second commissioning ID being the signaling device ID and the media session device ID as belonging to said at least one station;
wherein at least one of the first and second commissioning ID is generated by a user input means being a Hall switch comprised within the concerned one of the signaling device and the media session device, preferably within the media session device.

In embodiments, the device further comprises:
an IP interface (1a) for connecting with a plurality of IP stations (11, 11', 11") belonging to an IP domain (10);
wherein the device (1) is further configured for:
   detecting, via the signaling wiring (4), a SIP-relating call initiation request from said station (200) belonging to the plurality of stations (200, 200') with respect to an IP station (11) belonging to the plurality of IP stations (11, 11', 11");
   upon detecting said call initiation request, transmitting, via the IP interface (1a), said SIP-relating call initiation request to the IP station (11);
   upon call initiation, carrying a media session between the station (200) and the IP station (11), whereby the media session is carried between the device (1) and the station (200) over a dedicated channel on said media session wiring (3);
   wherein preferably said media session being carried between the device (1) and the station (200) over the dedicated channel relates to a duplex media session comprising two corresponding media streams being carried over respective dedicated channels on said media session wiring (3).

In embodiments, at least one of the IP stations relates to a SIP station. In embodiments, the IP stations relate to SIP stations. In embodiments, the dedicated channel relates to a dedicated LVDS channel.

In embodiments, the signaling wiring relates to a bus shared by the plurality of second stations, preferably a CAN bus.

In embodiments, the IP interface comprises the same IP-domain wiring used for IP packet switching comprising both said transmitting of said call initiation request to said IP station and said carrying of the media session between the device and the IP station.

In embodiments, the media session wiring is provided between the plurality of second stations according to a daisy chain bus topology with dedicated channels per media stream.

In embodiments, the second station comprises a plurality of media session devices, and the media session wiring is provided between the plurality of media session devices according to a daisy chain bus topology with dedicated channels per media stream.

In embodiments, the stations comprise a signaling device for connection with the signaling wiring of the device and a media device for connection with the session wiring of the device.

In embodiments, the IP domain wiring is UTP wiring. Preferably, the UTP wiring is at least Cat. 4 or Cat. 5 or Cat. 5e or Cat. 6.

In embodiments, the system comprises more than one device, each device associated with a respective second domain.

According to further aspects of the invention, which are not intended to limit the invention in any way, the invention may relate to following clauses 1-15.

**(Clause 1)** A device (1) comprising:
a gateway interface (1b) for connecting with a plurality of stations (200, 200'), preferably at least three stations, belonging to a gateway domain (20);
wherein the gateway interface (1b) comprises signaling wiring (4) and media session wiring (3);
wherein the device (1) is configured for:
   detecting, via the signaling wiring (4), a call initiation request from one of the stations (200) with respect to another station (200') belonging to said plurality of stations (200, 200');
   upon detecting said call initiation request, transmitting, via the signaling wiring (4), said call initiation request to the other station (200');
   upon call initiation, carrying a media session between the station (200) and the other station (200'), whereby the media session is carried between the device (1) and the station (200) and between the device (1) and the other station (200') over dedicated channels on said media session wiring (3);
   wherein preferably said media session being carried between the device (1) and the station (200) and between the device (1) and the other station (200') over the dedicated channels relates to a duplex media session comprising two corresponding media streams being carried over respective dedicated channels on said media session wiring (3).

**(Clause 2)** The device (1) of clause 1, wherein at least one station (200; 200') comprises a signaling device (21; 21') and a media session device (7; 7'); said signaling device (21; 21') being associated with a signaling device ID for connection with the signaling wiring (4) of the device (1); said media session device (7; 7') being associated with a media session device ID for connection with the media session wiring (3) of the device (1); wherein the device (1) comprises memory comprising commissioning information for linking each signaling device ID to each media session device ID for assigning the signaling device (21; 21') and the media session device (7; 7') to the same station (200; 200').

**(Clause 3)** The device (1) of clause 2, wherein the signaling device (21; 21') and the media session device (7; 7') are comprised in separate housings.

**(Clause 4)** The device (1) of clauses 2 or 3, wherein all interaction between the signaling device (21; 21') and the media session device (7; 7') comprised in the same station (200; 200') is mediated via the device (1).

**(Clause 5)** The device (1) of clauses 2-4, wherein for said at least one station (200; 200') the media session device comprises a first (7; 7') and second (9, 9') media session device each associated with a respective media session device ID; wherein for said at least one station (200; 200') the signaling device comprises a first signaling device (21; 21') and a first (6; 6') and second (8; 8') user signaling device each connected to the first signaling device (21; 21'), the first (6; 6') and second (8; 8') user signaling device each associated with a respective user signaling device ID; wherein said commissioning information includes information for linking the first user signaling device ID to the first media session device ID and the second user signal device ID to the second media session device ID for assignment to the same station (200; 200') acting as a first and second virtual agent.

**(Clause 6)** The device (1) of clause 5, wherein the first (6; 6') and second (8; 8') user signaling device are comprised in separate housings and each comprise a button for generating said call initiation request.

**(Clause 7)** The device (1) of clauses 1-6, wherein the device further comprises:
an IP interface (1a) for connecting with a plurality of IP stations (11, 11', 11") belonging to an IP domain (10);
wherein the device (1) is further configured for:
   detecting, via the signaling wiring (4), a SIP-relating call initiation request from said station (200) belonging to the plurality of stations (200, 200') with respect to an IP station (11) belonging to the plurality of IP stations (11, 11', 11");
   upon detecting said call initiation request, transmitting, via the IP interface (1a), said SIP-relating call initiation request to the IP station (11);
   upon call initiation, carrying a media session between the station (200) and the IP station (11), whereby the media session is carried between the device (1) and the station (200) over a dedicated channel on said media session wiring (3);
   wherein preferably said media session being carried between the device (1) and the station (200) over the dedicated channel relates to a duplex media session comprising two corresponding media streams being carried over respective dedicated channels on said media session wiring (3).

**(Clause 8)** The device (1) of clauses 2-7, wherein the device is further configured for:
entering a commissioning mode;
detecting, via one of the signaling wiring (4) and the media session wiring (3), a first commissioning ID originating from one of the signaling device (21, 6, 8; 21', 6', 8') and the media session device (7, 9; 7', 9') comprised in said at least one station (200);
detecting, via the other one of the signaling wiring (4) and the media session wiring (3), a second commissioning ID originating from the other one of the signaling device (21, 6, 8; 21', 6', 8') and the media session device (7, 9; 7', 9');
storing said first and second commissioning ID in said commissioning information, for linking the first and second commissioning ID being the signaling device ID and the media session device ID as belonging to said at least one station.

**(Clause 9)** The device (1) of clause 8, wherein the first and second commissioning ID are detected according to a predetermined sequence for commissioning the signaling device (21, 6, 8; 21', 6', 8') before the media session device (7, 9; 7', 9'), or vice versa.

**(Clause 10)** The device (1) of clauses 8-9, wherein said entering of said commissioning mode by the device (1) comprises transmitting a trigger for a visual or auditory indication on an indicator belonging to at least one of the signaling device (21, 6, 8; 21', 6', 8') and the media session device (7, 9; 7', 9'), said visual or auditory indicator terminating either after said detecting of the concerned one of the first or second commissioning ID or after said storing of said first and second commissioning ID in said commissioning information.

**(Clause 11)** The device (1) of clauses 1-10,
wherein said media session being carried between the device (1) and the station (200) over the dedicated channel relates to a duplex media session comprising two corresponding media streams being carried over respective dedicated channels on said media session wiring (3);
wherein the device is further configured for:
   detecting, via the media session wiring (3), at least a media sample originating from the media session device (7, 7') over a further dedicated channel different from the dedicated channels of the media streams of the duplex media session, said media sample representing a digital echo of the media stream carried to the media session device (7, 7');
   calculating, based on the media stream of the duplex media session carried to the media session device (7, 7') and the detected media sample originating from the media session device (7, 7'), a time shift;
   performing echo cancellation on the media stream of the duplex media session carried from the media session device (7, 7') based on the calculated time shift.

**(Clause 12)** A system comprising:
a plurality of stations (200, 200'), preferably at least three stations, belonging to a gateway domain (20);
preferably, a plurality of IP stations (11, 11', 11") belonging to an IP domain (10);
a device (1), preferably the device of clauses 1-12, comprising:
   a gateway interface (1b) for connecting with the plurality of stations (200, 200');
   preferably, an IP interface (1a) for connecting with the plurality of IP stations (11, 11', 11");
   wherein the gateway interface (1b) comprises signaling wiring (4) and media session wiring (3);
   wherein the device (1) is configured for:
      detecting, via the signaling wiring (4), a call initiation request from one of the stations (200) with respect to another station (200') belonging to said plurality of stations (200, 200');
      upon detecting said call initiation request, transmitting, via the signaling wiring (4), said call initiation request to the other station (200');
      upon call initiation, carrying a media session between the station (200) and the other station (200'), whereby the media session is carried between the device (1) and the station (200) and between the device (1) and the other station (200') over dedicated channels on said media session wiring (3);
      wherein said plurality of the stations (200, 200') is configured for:
         transmitting, based on any user-related trigger, any call initiation request to the device (1);
         detecting, from the device (1), any call initiation request;
         upon any call initiation, carrying the media session to and from the device (1);
         wherein preferably said media session being carried between the device (1) and the station (200) and between the device (1) and the other station (200') over the dedicated channels relates to a duplex media session comprising two corresponding media streams being carried over respective dedicated channels on said media session wiring (3).

**(Clause 13)** System of clause 12, wherein at least one station (200; 200') comprises a signaling device (21; 21') and a media session device (7; 7'); said signaling device (21; 21') being associated with a signaling device ID for connection with the signaling wiring (4) of the device (1); said media session device (7; 7') being associated with a media session device ID for connection with the media session wiring (3) of the device (1);
wherein the device is further configured for:
entering a commissioning mode;
detecting, via one of the signaling wiring (4) and the media session wiring (3), a first commissioning ID originating from one of the signaling device (21, 6, 8; 21', 6', 8') and the media session device (7, 9; 7', 9') comprised in said at least one station (200);
detecting, via the other one of the signaling wiring (4) and the media session wiring (3), a second commissioning ID originating from the other one of the signaling device (21, 6, 8; 21', 6', 8') and the media session device (7, 9; 7', 9');
storing said first and second commissioning ID, for linking the first and second commissioning ID being the signaling device ID and the media session device ID as belonging to said at least one station;
and wherein at least one of the first and second commissioning ID is generated by a user input means being a Hall switch comprised within the concerned one of the signaling device (21, 6, 8; 21', 6', 8') and the media session device (7, 9; 7', 9'), preferably within the media session device (7, 9; 7', 9').

**(Clause 14)** Method for commissioning an intercom system, the intercom system comprising:
a plurality of signaling devices (21, 6, 8; 21', 6', 8') and media session devices (7, 9; 7', 9') belonging to a gateway domain (20), one of the signaling device and media session devices being the first devices and the other being the second devices according to a predetermined commissioning order;
preferably, a plurality of IP stations (11, 11', 11") belonging to an IP domain (10);
a device (1), preferably the device of clauses 2-11, comprising
   a gateway interface (1b) comprising signaling wiring (4) connected to the signaling devices (21, 6, 8; 21', 6', 8') and media session wiring (3) connected to the media session devices (7, 9; 7', 9');
   preferably, an IP interface (1a) connected with the plurality of IP stations;
the method comprising the steps of:
   entering commissioning mode, causing indicators belonging to at least the first devices or the second devices to generate a visual or auditory indicator;
   manually selecting a first device for commissioning, via a user input means on said first device, thereby causing a first commissioning ID to be transmitted to the device (1);
   manually selecting a second device to be associated to the first device within a common station (200, 200'), via a user input means on said second device, thereby causing a second commissioning ID to be transmitted to the device (1);
   having the device (1) store said first and second commissioning ID, for linking the first and second commissioning ID being the signaling device ID and the media session device ID as belonging to the same station (200; 200');
   repeating said manual selecting of other respective first and second devices, for linking each as belonging to the same respective stations (200, 200').

**(Clause 15)** Use of a Hall switch for commissioning an intercom system, wherein the intercom system comprises a first device associated with a first commissioning ID and a second device associated with a second commissioning ID, wherein the commissioning comprises linking the first and second device as belonging to the same station (200; 200') based on a first signal comprising the first commissioning ID and a second signal comprising the second commissioning ID, and wherein the Hall switch is used as user input means for generating at least one of said first and said second signal.

### (End of clauses listing)

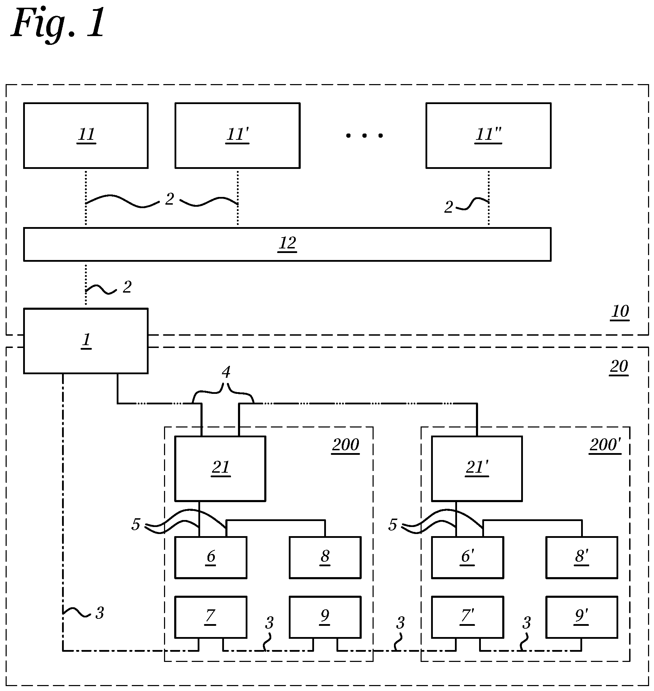

Example embodiments of the invention will be described with reference to Figs. 1-2.

### Example 1: example device and system according to the invention

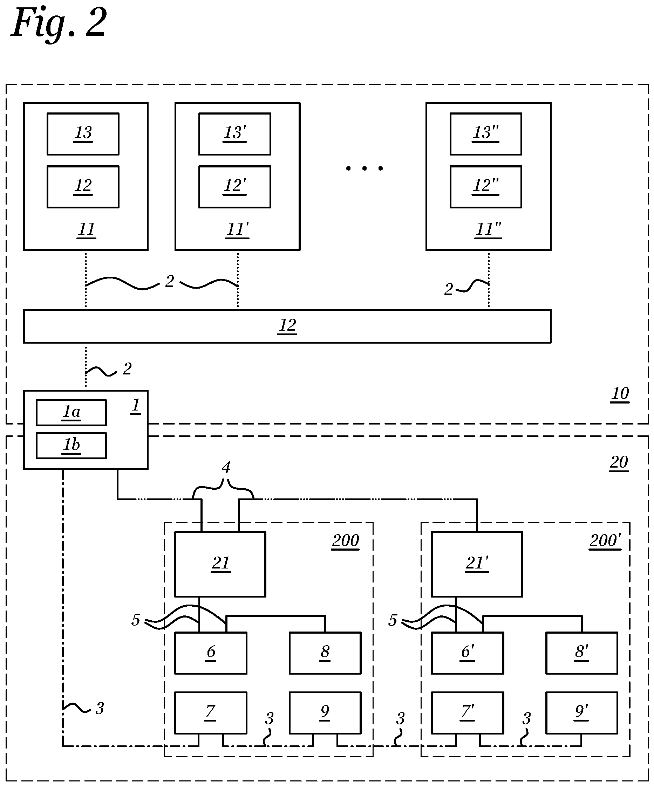

This example relates to Figure 1 and 2. Thereby, Figure 1 shows a first example system overview according to the invention, whereas Figure 2 shows a second example system overview according to the invention, all relating to a single intercom system.

In this example, the intercom functionality includes three types of interaction. The first interaction type is between stations within the gateway domain (or, equivalently, second domain), mediated through the same device 1. The second type of interaction is between IP stations within the IP domain (or, equivalently, first domain). The third interaction type is between an IP station in the IP domain and a station belonging to the gateway domain, mediated by the device 1.

The present example thereby relates to an intercom system for healthcare applications. Particularly, the system is an intercom system for use in a hospital building. The building comprises multiple wards, with each ward provided with a device 1 according to the invention. The device 1, also called ward controller, provides an interface between a first domain 10 available to nurses and a second domain being the respective ward to which the respective device 1 is attributed.

The first domain 10 is referred to as the IP domain. It comprises a plurality of IP stations 11, 11', 11", which, in this example, are connected to an IP router 12 also comprised in the IP domain 10. The IP domain 10 further comprises the IP-domain wiring 2 interconnecting the device 1, the IP router 12, and the plurality of IP stations 11, 11', 11". The IP stations are also referred to as nurse stations.

In this example, the IP-domain wiring 2 is provided between the device 1 and the IP router 12, on the one hand, and the IP router 12 and the plurality of IP stations 11, 11', 11", on the other hand. However, in other examples (not shown), other topologies are provided, such as topologies wherein more than one IP station is directly connected to the device 1, and/or set-ups wherein an integrated IP router is comprised in the device 1, and wherein at least two of the IP stations are connected to the device 1 through the integrated IP router rather than (or instead of) via the external IP router 12.

**At** the edge of the IP domain, at the level of the device 1, communication relating to the signaling and the media session is transmitted and received over the internet protocol (IP). In this example, all data over the IP-domain wiring 2 is carried over IP. In other examples (not discussed here), only a part of the data over the IP-domain wiring 2 is carried over IP. This may relate to both SIP over IP data carried between the device 1 and application data which is transmitted and received over IP but is not part of the SIP interaction itself. In this example, the traffic carried between the device 1 and the IP stations relates both to SIP traffic data carried between the IP interface 1a comprised in the device 1 and the IP agent (12, 12', 12") comprised in each IP station, as well as application data carried between the application interface (not shown) comprised in the device 1 and the application interface (13, 13', 13") comprised in each IP station. In other example embodiments (not shown), the application interface is provided as part of the IP interface, i.e., the IP interface 1a comprised in the device is a SIP-relating interface 1a providing both SIP and non-SIP functionality, or, equivalently, the IP interface 1a and the application interface are integrated in a single interface referred to as SIP-related interface, or, for short, IP interface.

In this example, the IP domain wiring 2 is UTP wiring. Preferably, the UTP wiring is at least Cat. 4 or Cat. 5 or Cat. 5e or Cat. 6.

In this example, the IP traffic data carried between the device 1 and each of the IP stations thereby relates to both SIP signaling data and the media session data of the session initiated by means of SIP, being the session initiation protocol used for initiating, editing, and terminating the session. In this example, for each session, the IP agents (12, 12', 12") comprised in each IP station act as an IP client, while the IP interface 1a comprises an IP agent acting as SIP server. In this example, the SIP server thereby handles the initiation, editing and terminating of sessions between one or more IP stations each identified by an IP station ID, on the one hand, and one or more virtual agents belonging to the second domain 20, each identified by one or more SIP-agent-related IDs. In this example, the SIP-agent-related ID is a pair of a user signaling device ID and a media session device ID. In other examples not considered herein the SIP-agent-related ID may relate to a single SIP agent ID associated with a single SIP agent device. The device 1, including its SIP server, thereby comprises memory comprising commissioning information. Based on the commissioning information, the device 1 presents the signaling devices (6, 8; 6', 8') and media session devices (7, 9; 7', 9') as belonging to single virtual agents to the IP stations (11, 11', 11"), without requiring the signaling devices and media session devices to keep track of their membership with respect to their concerned virtual agent.

In this example, the virtual agents belonging to the second domain 20 all relate to virtual SIP clients, and the sessions initiated between the first and second domain relate to SIP sessions running between the (actual) SIP clients (12, 12', 12") of the first domain and the virtual SIP clients of the second domain, mediated by the device comprising a SIP server.

The commissioning information is entered during commissioning and comprises at least the information needed for associating devices of the second domain 20 to virtual agents.

The application data may relate to an application programming interface (API) for exchanging information between the device 1 and an app running on each IP station. In this example, the IP stations are SIP-enabled calling devices provided with Android as operating system (OS), whereby the OS allows to run both SIP functionality and the related app to run in an integrated fashion, with the graphical user interface of the app providing a single interface for the intercom system. Thereby, some IP stations, or all, may relate to SIP devices for audio calls, whereby some, or all, may furthermore support video.

The second domain 20 relates to the one or more wards that may be reached through the intercom system. For each ward, the device 1, acting as ward controller, provides an interface toward the first domain 10. The ward comprises multiple stations, in this example referred to as rooms (200, 200'). In this example, the rooms (200, 200') considered are rooms with two beds, each bed associated with a separate virtual agent. In other examples (not shown), the ward also has at least one room with a different number of beds and/or a different number of virtual agents. For instance, the ward may have a room associated with a single bed and an associated single virtual agent. Also, the ward may have a room associated with three virtual agents, or more than three virtual agents. In other examples, the ward only has rooms with a single virtual agent, e.g., in wards with only single-bed rooms.

In this example, the rooms (200, 200') considered each have a signaling device (21, 21'), also referred to as a room hub, all connected to the device 1 via signaling wiring 4. In this example, the connection is done with a daisy chain topology; in other examples, any other topology, such as a star or ring topology, may be used.

In this example, the signaling wiring carries data over high-speed CAN bus protocol. In this example, this relates to standard CAN as known to the skilled person. In other examples, this relates to a modified/proprietary version of CAN, and/or another bus protocol, and/or to LVDS, i.e., the same protocol considered for the media session wiring 3, and/or to RS485.

The signaling devices (21, 21') of this example are connected to further signaling devices present in the room, namely the user signaling devices. For the first room 200, this relates to user signaling device 6 associated with the first bed (or, equivalently, first patient), and user signaling device 8 associated with the second bed (or, equivalently, second patient). Likewise, for the second room 200', this relates to user signaling device 6' associated with one bed, and user signaling device 8' associated with the other bed. In this example, the user signaling devices are thereby connected to the signaling device with user signaling wiring 5 according to a daisy chain topology and based on a modified (non-standard) CAN bus protocol; in other examples, other topologies (such as star or ring) and/or other protocols (such as standard CAN, or LVDS, or RS485) may be considered.

The user signaling devices may relate, e.g., to a push-button device connected with a cable to a wall plug.

The rooms (200, 200') considered each have media session devices (7, 9, 7', 9'). For the first room 200, this relates to media session device 7 associated with the first bed (or, equivalently, first patient), and media session device 9 associated with the second bed (or, equivalently, second patient). Likewise, for the second room 200', this relates to media session device 7' associated with one bed, and media session device 9' associated with the other bed. In this example, the media session devices are thereby connected to the device 1 with media session wiring 3 according to a daisy chain topology and based on LVDS; in other examples, other topologies (such as star or ring) may be considered. Also other protocols other than LVDS may be considered, wherein preferably it relates to a protocol suitable for providing a dedicated channel 3 on said media session wiring for each media session device.

The system, and particularly the device 1 and the devices of the second domain 20, is thereby configured for associating each bed (or patient) with a virtual agent, thereby providing patient-specific (or bed-specific) alarming to the IP stations of nurses, which relate to actual SIP agents. The intercom system allows nurses to reply to the alarm via a session initiated with the IP station acting as regular SIP agent, whereas functionality of the virtual agents is handled at the level of the device, through the IP interface 1a and the gateway interface 1b comprised therein. Additionally, nurses present in another room at the time of an alarm may reply via the station present in that other room, thereby setting up a session between stations of the gateway domain, mediated by the device (in case the room of the patient and the room where the nurse is located are both associated with the same device) or by the device and a second device (in case the room of the patient and the room where the nurse is located are associated with different devices).

Advantageously, the gateway interface 1b comprises both signaling wiring 4 and media session wiring 3. This allows to reduce the device complexity of devices within the second domain, and/or enhancing flexibility, by handling the definition of virtual agents at the level of the device 1. This allows to alleviate the hardware and/or software requirements of devices and wiring belonging to the second domain, and furthermore allows to use these devices in a modular fashion. Particularly, rather than having hardwired or similar stringent links between the signaling-related devices 21 and 6 and the media session device 7 for defining an IP agent, the IP agents are virtualized, with signaling devices 21 and 6 that may be separate devices, and a media session device 7 which may be another device. The functionality implemented in each device may be simplified, as none of the devices is required to implement all the functionalities of an actual SIP agent. This implies that less traffic and/or more predictable traffic is running over the wiring of the second domain, allowing to use legacy cabling (with, e.g., smaller bandwidth), rather than requiring new cabling (with, e.g., larger bandwidth). Thereby, the commissioning information comprised in the device 1 ensures that devices of the second domain 20 are linked in software, for defining a virtual agent. This provides enhanced flexibility, as any device may be replaced without the other devices being replaced, and a simple commissioning cycle may suffice to define the replacement device as part of the virtual agent. Also, this allows flexibility with respect to the number of beds, allowing a new commissioning cycle to add or remove a virtual agent (or bed) to a given room. Preferably, the LVDS connection in the second domain provides separate dedicated channels in each direction for carrying the media session, as this provides for enhanced robustness, with more predictable system behavior, which may lead to less stringent implementation requirements and, related, reduced associated cost.

In general, the device 1 is configured for detecting, via the signaling wiring 4, a call initiation request from one of the stations 200 with respect to an associated IP station, which, in this example, is a SIP station 11. Upon detecting said call initiation request, the device transmits, via the IP interface 1a, said call initiation request to the associated SIP station 11. Upon call initiation, the device carries a media session between the station 200 and the associated SIP station 11. Thereby, preferably, the media session is carried between the device 1 and the station 200 over a dedicated channel on said media session wiring 3.

Considering the example use case of a patient using a user signaling device (6, 7), for example user signaling device 6. Pressing the user signaling device causes an alarm to be transmitted from the user signaling device 6 via the user signaling wiring 5, to the signaling device 21. The signalling device 21, in its turn, transmits the alarm, via the signaling wiring, to the device 1. Thereby, based on information carried in the alarm signal, the device determines the user signaling device ID associated with the alarm. Based on commissioning information, the device then signals the alarm, via the IP interface 1a, to the IP station 11 of the nurse responsible for the bed (or patient) associated with the alarm. Through user action of the nurse with respect to the IP station 11, preferably mediated via the app and the application interface 13 comprised in the IP station, an IP session is initiated involving the IP agent 12, allowing to establish a media session between the IP station 11 and the virtual agent associated with the patient. Thereby, in the first domain 10, the media session data is carried over IP, via the IP domain wiring 2, whereas in the second domain 20, the media session data is carried over LVDS, via the media session wiring 3. Preferably, the latter LVDS connection provides separate dedicated channels in each direction for carrying the media session, as this provides for enhanced robustness, with more predictable system behavior, which may lead to less stringent implementation requirements and, related, reduced associated cost.

In this example, the media session data is carried between the device 1 and the rooms (200, 200') over dedicated channels for each direction. This relates to duplex media sessions comprising two corresponding media streams being carried over respective dedicated channels on said media session wiring 3.

In this example, all rooms 200; 200' comprise a signaling device 21; 21' and a media session device 7; 7'. The signaling device 21; 21' is associated with a signaling device ID for connection with the signaling wiring 4 of the device 1. The media session devices 7; 7' are associated with a media session device ID for connection with the media session wiring 3 of the device 1. The device 1 comprises memory comprising commissioning information for linking each signaling device ID to each media session device ID. The signaling devices 21; 21' and the media session devices 7; 7' are comprised in separate housings. All interaction between the signaling device 21; 21' and the media session device 7; 7' comprised in the same station 200; 200' is mediated via the device 1.

For the example of room 200, this allows to assign the signaling device 21 and the media session device 7 to the same room 200, wherein the signaling device and the media session device act as single virtual agent associated to the room.

Moreover, in this example, the room 200 does not have a single bed but two beds, each associated with a virtual agent. Still with the example of room 200, a first bed (or patient) is associated with a first virtual agent, and a second bed (or patient) with a second virtual agent. This relates to the media session device comprising a first 7 and second 9 media session device each associated with a respective media session device ID; wherein the room 200 comprises a first signaling device 21 and a first 6 and second 8 user signaling device each connected to the first signaling device 21, the first 6 and second 8 user signaling device each associated with a respective user signaling device ID associated with a bed (or patient). Thereby, the commissioning information present in the device 1 includes information for linking the first user signaling device ID to the first media session device ID and the second user signal device ID to the second media session device ID for assignment to the same room. The pair of devices 6 and 7 thereby act (together with device 21) as first virtual agent, and likewise for devices 8 and 9 (together with device 21), for the second virtual agent.

Moreover, in this example, a plurality of rooms is considered (e.g., ten, or more than ten), whereof two rooms 200 and 200' are shown in Figures 1 and 2. Thereby, the identification of virtual agents across rooms and wards is preferably such that the ID of each virtual agent is unique within the intercom system. In other examples (not further discussed here), virtual agents may have an ID that is unique only at the level of a single room, and the identification at the level of wards is done by including the ID of the signaling device 21, 21'. In yet other examples not further discussed here), virtual agents may have an ID that is unique at the level of wards, and the identification at the level of the intercom system is done by including the ID of the device 1 of the ward whereto the virtual agent belongs.

As clear from the above, the operation of the device relies on commissioning information. This relates to having the device enter a commissioning mode. In a next step, the device detects, via one of the signaling wiring 4 and the media session wiring 3, a first commissioning ID originating from one of the signaling device 21, 6, 8; 21', 6', 8' and the media session device 7, 9; 7', 9' comprised in one of the rooms, e.g., room 200. In this example (with other examples equally possible but not considered further below), it is always the signaling device that is first selected by the operator performing the commissioning. Hence, the first commissioning ID relates to the signaling device ID, particularly to the user signaling device ID associated with the button being pressed. In another step, the device detects, via the other one of the signaling wiring 4 and the media session wiring 3, a second commissioning ID originating from the other one of the signaling device 21, 6, 8; 21', 6', 8' and the media session device 7, 9; 7', 9'. In this example, this is the media session device. In a next commissioning step, the device stores said first and second commissioning ID in said commissioning information, thereby linking the first and second commissioning ID being the signaling device ID and the media session device ID as belonging to room 200. In other words, by selecting device 6 and then device 7, an operator may commission these devices to belong to a single virtual agent, which happens to be present in room 200.

In this example, as said, the first and second commissioning ID are detected according to a predetermined sequence. Particularly, during commissioning, the signaling device 21, 6, 8; 21', 6', 8' is selected before the media session device 7, 9; 7', 9'. In other examples, this is vice versa.

In this example, the entering into commissioning mode commences with the device 1, e.g., by having a user press a button on the device. This triggers commissioning on ward level. In other examples, commissioning can be done on room level, by providing an appropriate input means for room selection. In other examples not further considered here, commissioning can be done on room level by having a user select the signaling device, e.g. by pressing a button on the signaling device. The commissioning commencing at the device causes transmission, within the second domain 20, of a trigger for a visual or auditory indication on an indicator belonging to at least one of the signaling device 21, 6, 8; 21', 6', 8' and the media session device 7, 9; 7', 9'. In this example, this relates to having a LED blink on the user signaling devices, and preferably on both the user signaling devices and the media session devices, according to either the same colors for all devices, or different colors (one for the user signaling devices, one for the media session devices). Thereby, the visual or auditory indicator terminates either after said detecting of the concerned one of the first or second commissioning ID or after said storing of said first and second commissioning ID in said commissioning information.

In this example, at least one of the first and second commissioning ID is generated by a user input means being a Hall switch comprised within the concerned one of the signaling device 21, 6, 8; 21', 6', 8' and the media session device 7, 9; 7', 9'. Thereby, the Hall switch may be switched by the operator during commissioning, by means of a simple magnet or similar device, which may be needed only during commissioning, and not during regular operation. This relates to a particular use of the Hall switch according to the invention, wherein the intercom system comprises a first device associated with a first commissioning ID and a second device associated with a second commissioning ID, wherein the commissioning comprises linking the first and second device as belonging to the same station (200; 200') based on a first signal comprising the first commissioning ID and a second signal comprising the second commissioning ID, and wherein the Hall switch is used as user input means for generating at least one of said first and second signal.

Particularly, in this example, the Hall switch is present within the media session device 7, 9; 7', 9'. This advantageously provides a media session device that may be a loudspeaker (for audio calls) or a loudspeaker and screen (for video calls) without any further button being visible or present on the front or any external surface of the device. By not having such a button, the overall hygiene of the device may be improved, as there is no need for touching the device or cleaning the button. Also user interaction may be simplified, because buttons that are needed only for commissioning mode may needlessly confuse users during regular operation.

Particularly, in this example, owing to the use of a Hall switch, only the signaling device is provided with a commissioning-related button, whereas for the media session devices, visible buttons can be avoided. The commissioning thereby comprises a first step, wherein the pressing of the visible button on a selected signaling device causes a first signal to be generated, the first signal comprising the signaling device ID as first commissioning ID. Subsequently, in the second step, the invisible Hall switch present on a selected media session device is switched by means of a magnet, causes the second signal to be generated, the second signal comprising the media session device ID as second commissioning ID. This causes the selected signaling device and the selected media session device to be linked as belonging to the same station, acting as virtual agent, thereby completing the commissioning of this station.

In this example, echo cancellation is provided by adequately using the dedicated channels provided by the LVDS interface. Particularly, the device is configured for detecting, via the media session wiring 3, at least a media sample originating from the media session device 7, 7' over a further dedicated channel different from the dedicated channels of the media streams of the duplex media session. In the example, this relates to the entire media stream, rather than only samples, as this leads to echo cancellation that may be simple and/or robust and/or fast. The media sample represents a digital echo of the media stream carried to the media session device 7, 7'. In this example, it concerns a full "copy" of the media stream; however, as is clear to the skilled person also a sample, e.g., a brief sample sent according to a predetermined schedule (e.g., a few milliseconds of data sent each second), may allow echo cancellation. In a next step, the device is configured for calculating, based on the media stream of the duplex media session carried to the media session device 7, 7' and the detected media sample originating from the media session device 7, 7', a time shift. This may relate to the time shift between the moment of sending the media stream from the device 1 to the virtual agent, and the moment the echo of this stream arrives back at the device 1. This relates to a time shift that may be largely constant during operation, yet is unknown until after commissioning. In a next step, the device may perform echo cancellation on the media stream of the duplex media session carried from the media session device 7, 7' based on the calculated time shift. As the skilled person knows, acoustic echo cancellation (AEC) and echo suppression may be performed reliably based on a known and essentially constant time shift, according to different digital signal processing algorithms as known to the skilled person. Preferably, the algorithm relates to "subtracting" the media streams of the two directions while taking into account the calculated time shift. In this example, the echo cancellation thus relies mainly on the subtraction of two signals. In other example variants (not further considered here), the echo cancellation may rely on any combination of subtraction, filtering, preferably adaptive filtering. For example, the filtering or adaptive filtering may relate to accounting for reverberation on walls and/or acoustic parameters of loudspeaker and microphone.

### Example 2: second example device and system according to the invention

Example 2 is largely the same as example 1, with the difference that no IP domain is present. The system comprises only a plurality of stations 200, 200', the number being larger than three (with only two stations illustrated on Fig. 1 and 2). The intercom functionality relates solely to the interaction between stations within the gateway domain, all mediated through the same device 1.

### Example 3: third example device and system according to the invention

Example 3 is largely the same as example 1 and deals particularly with the provision of a second device. Apart from the plurality of stations 200, 200' connected to device 1, there is at least a second device (not shown) (and preferably also a third device) connecting to the same IP router 12 via IP-domain wiring 2. Thereby, the station ID for each station is presumed unique over the entirety of the IP domain and the gateway domain, i.e., the entire system.

Like in Example 1 and 2, the intercom functionality includes the interaction between stations within the gateway domain, all mediated through the same device 1.

The system of Example 3 furthermore supports any interaction according to Example 1. Particularly, in the system of Example 3, when a call initiation request is originating from an IP station with respect to a station in the sub-domain of any of the device and the second device, the concerned device is able to detect and forward the call initiation request, based on the commissioning information provided during commissioning of the system. The other one of the device and the second device, on the other hand, is equally able to detect the call initiation request, and may act thereupon based on the commissioning information, by, for example, ignoring the call initiation request.

Furthermore, different from Example 2 yet similar to Example 1, in the system of Example 3, another interaction occurs when a call initiation request is originating from a station in the sub-domain of any of the device and the second device, with respect to a station in the sub-domain of the other of the device and the second device. In this case, the device of the originating sub-domain is able to detect and forward the call initiation request, based on the commissioning information provided during commissioning of the system. The other one of the device and the second device, that is controlling the sub-domain of the station for which the call initiation request is intended, is able to detect this call initiation request, and may act thereupon based on the commissioning information, by sending the call initiation request to the concerned station.

Summarizing, in Example 3, the intercom functionality relates to at least four types of interaction. A first interaction type is between stations within the same gateway sub-domain, mediated through the same device 1. A second interaction type is between stations belonging to different gateway sub-domains, mediated through the device but also the second device. A third interaction type is between a station belonging to the gateway domain and an IP station. A fourth interaction type is between a first and a second IP station belonging to the IP domain.

(End of Example 3)

## Claims

1. A device (1) comprising:
a gateway interface (1b) comprising signaling wiring (4) and media session wiring (3) for connecting with a plurality of stations (200, 200'), preferably at least three stations, belonging to a gateway domain (20);
wherein the device (1) is configured for:
detecting, via the signaling wiring (4), a call initiation request from one of the stations (200) with respect to another station (200') belonging to said plurality of stations (200, 200');
upon detecting said call initiation request, transmitting, via the signaling wiring (4), said call initiation request to the other station (200');
upon call initiation, carrying a media session between the station (200) and the other station (200'), whereby the media session is carried between the device (1) and the station (200) and between the device (1) and the other station (200') over dedicated channels on said media session wiring (3);
wherein, for at least one station (200; 200'), said connecting to the station via said respective signaling wiring (4) and media session wiring (4) of the gateway interface (1b) relates to connecting to a respective signaling device (21; 21') associated with a signaling device ID and a media session device (7; 7') associated with a media session device ID;
wherein the device (1) comprises memory comprising commissioning information for linking each signaling device ID to each media session device ID for assigning the signaling device (21; 21') and the media session device (7; 7') to the same station (200; 200').

2. The device (1) of claim 1, wherein said media session being carried between the device (1) and the station (200) and between the device (1) and the other station (200') over the dedicated channels relates to a duplex media session comprising two corresponding media streams being carried over respective dedicated channels on said media session wiring (3).

3. The device (1) of claims 1 or 2, wherein the signaling device (21; 21') and the media session device (7; 7') are comprised in separate housings.

4. The device (1) of claims 1-3, wherein all interaction between the signaling device (21; 21') and the media session device (7; 7') comprised in the same station (200; 200') is mediated via the device (1).

5. The device (1) of claims 1-4, wherein for said at least one station (200; 200') the media session device comprises a first (7; 7') and second (9, 9') media session device each associated with a respective media session device ID; wherein for said at least one station (200; 200') the signaling device comprises a first signaling device (21; 21') and a first (6; 6') and second (8; 8') user signaling device each connected to the first signaling device (21; 21'), the first (6; 6') and second (8; 8') user signaling device each associated with a respective user signaling device ID; wherein said commissioning information includes information for linking the first user signaling device ID to the first media session device ID and the second user signal device ID to the second media session device ID for assignment to the same station (200; 200') acting as a first and second virtual agent.

6. The device (1) of claim 5, wherein the first (6; 6') and second (8; 8') user signaling device are comprised in separate housings and each comprise a button for generating said call initiation request.

7. The device (1) of claims 1-6, wherein the device further comprises:
an IP interface (1a) for connecting with a plurality of IP stations (11, 11', 11") belonging to an IP domain (10);
wherein the device (1) is further configured for:
detecting, via the signaling wiring (4), a SIP-relating call initiation request from said station (200) belonging to the plurality of stations (200, 200') with respect to an IP station (11) belonging to the plurality of IP stations (11, 11', 11");
upon detecting said call initiation request, transmitting, via the IP interface (1a), said SIP-relating call initiation request to the IP station (11);
upon call initiation, carrying a media session between the station (200) and the IP station (11), whereby the media session is carried between the device (1) and the station (200) over a dedicated channel on said media session wiring (3);
wherein **preferably** said media session being carried between the device (1) and the station (200) over the dedicated channel relates to a duplex media session comprising two corresponding media streams being carried over respective dedicated channels on said media session wiring (3).

8. The device (1) of claims 1-7, wherein the device is further configured for:
entering a commissioning mode;
detecting, via one of the signaling wiring (4) and the media session wiring (3), a first commissioning ID originating from one of the signaling device (21, 6, 8; 21', 6', 8') and the media session device (7, 9; 7', 9') comprised in said at least one station (200);
detecting, via the other one of the signaling wiring (4) and the media session wiring (3), a second commissioning ID originating from the other one of the signaling device (21, 6, 8; 21', 6', 8') and the media session device (7, 9; 7', 9');
storing said first and second commissioning ID in said commissioning information, for linking the first and second commissioning ID being the signaling device ID and the media session device ID as belonging to said at least one station.

9. The device (1) of claim 8, wherein the first and second commissioning ID are detected according to a predetermined sequence for commissioning the signaling device (21, 6, 8; 21', 6', 8') before the media session device (7, 9; 7', 9'), or vice versa.

10. The device (1) of claims 8-9, wherein said entering of said commissioning mode by the device (1) comprises transmitting a trigger for a visual or auditory indication on an indicator belonging to at least one of the signaling device (21, 6, 8; 21', 6', 8') and the media session device (7, 9; 7', 9'), said visual or auditory indicator terminating **either** after said detecting of the concerned one of the first or second commissioning ID or after said storing of said first and second commissioning ID in said commissioning information.

11. The device (1) of claims 1-10,
wherein said media session being carried between the device (1) and the station (200) over the dedicated channel relates to a duplex media session comprising two corresponding media streams being carried over respective dedicated channels on said media session wiring (3);
wherein the device is further configured for:
detecting, via the media session wiring (3), at least a media sample originating from the media session device (7, 7') over a further dedicated channel different from the dedicated channels of the media streams of the duplex media session, said media sample representing a digital echo of the media stream carried to the media session device (7, 7');
calculating, based on the media stream of the duplex media session carried to the media session device (7, 7') and the detected media sample originating from the media session device (7, 7'), a time shift;
performing echo cancellation on the media stream of the duplex media session carried from the media session device (7, 7') based on the calculated time shift.

12. A system comprising:
a plurality of stations (200, 200'), preferably at least three stations, belonging to a gateway domain (20);
**preferably,** a plurality of IP stations (11, 11', 11") belonging to an IP domain (10);
a device (1), preferably the device of claims 1-12, comprising:
a gateway interface (1b) comprising signaling wiring (4) and media session wiring (3) for connecting with the plurality of stations (200, 200');
**preferably,** an IP interface (1a) for connecting with the plurality of IP stations (11, 11', 11");
wherein the device (1) is configured for:
detecting, via the signaling wiring (4), a call initiation request from one of the stations (200) with respect to another station (200') belonging to said plurality of stations (200, 200');
upon detecting said call initiation request, transmitting, via the signaling wiring (4), said call initiation request to the other station (200');
upon call initiation, carrying a media session between the station (200) and the other station (200'), whereby the media session is carried between the device (1) and the station (200) and between the device (1) and the other station (200') over dedicated channels on said media session wiring (3);
wherein said plurality of the stations (200, 200') is configured for:
transmitting, based on any user-related trigger, any call initiation request to the device (1);
detecting, from the device (1), any call initiation request;
upon any call initiation, carrying the media session to and from the device (1);
wherein, for at least one station (200; 200'), said connecting to the station via said respective signaling wiring (4) and media session wiring (4) of the gateway interface (1b) relates to connecting to a respective signaling device (21; 21') associated with a signaling device ID and a media session device (7; 7') associated with a media session device ID;
wherein the device (1) comprises memory comprising commissioning information for linking each signaling device ID to each media session device ID for assigning the signaling device (21; 21') and the media session device (7; 7') to the same station (200; 200').

13. System of claim 12, wherein the device is further configured for:
entering a commissioning mode;
detecting, via one of the signaling wiring (4) and the media session wiring (3), a first commissioning ID originating from one of the signaling device (21, 6, 8; 21', 6', 8') and the media session device (7, 9; 7', 9') comprised in said at least one station (200);
detecting, via the other one of the signaling wiring (4) and the media session wiring (3), a second commissioning ID originating from the other one of the signaling device (21, 6, 8; 21', 6', 8') and the media session device (7, 9; 7', 9');
storing said first and second commissioning ID, for linking the first and second commissioning ID being the signaling device ID and the media session device ID as belonging to said at least one station;
and wherein at least one of the first and second commissioning ID is generated by a user input means being a Hall switch comprised within the concerned one of the signaling device (21, 6, 8; 21', 6', 8') and the media session device (7, 9; 7', 9'), preferably within the media session device (7, 9; 7', 9').

14. Method for commissioning an intercom system, the intercom system comprising:
a plurality of signaling devices (21, 6, 8; 21', 6', 8') and media session devices (7, 9; 7', 9') belonging to a gateway domain (20), one of the signaling device and media session devices being the first devices and the other being the second devices according to a predetermined commissioning order;
**preferably,** a plurality of IP stations (11, 11', 11") belonging to an IP domain (10);
a device (1), preferably the device of claims 1-11, comprising
a gateway interface (1b) comprising signaling wiring (4) connected to the signaling devices (21, 6, 8; 21', 6', 8') and media session wiring (3) connected to the media session devices (7, 9; 7', 9');
**preferably,** an IP interface (1a) connected with the plurality of IP stations;
the method comprising the steps of:
entering commissioning mode, causing indicators belonging to at least the first devices or the second devices to generate a visual or auditory indicator;
manually selecting a first device for commissioning, via a user input means on said first device, thereby causing a first commissioning ID to be transmitted to the device (1);
manually selecting a second device to be associated to the first device within a common station (200, 200'), via a user input means on said second device, thereby causing a second commissioning ID to be transmitted to the device (1);
having the device (1) store said first and second commissioning ID, for linking the first and second commissioning ID being the signaling device ID and the media session device ID as belonging to the same station (200; 200');
repeating said manual selecting of other respective first and second devices, for linking each as belonging to the same respective stations (200, 200').

15. Use of a Hall switch for commissioning an intercom system, wherein the intercom system comprises a first device associated with a first commissioning ID and a second device associated with a second commissioning ID, wherein the commissioning comprises linking the first and second device as belonging to the same station (200; 200') based on a first signal comprising the first commissioning ID and a second signal comprising the second commissioning ID, and wherein the Hall switch is used as user input means for generating at least one of said first and said second signal.
